# EUROPEAN PATENT APPLICATION

(11) **EP 3 716 422 A1**
(43) Date of publication of application: **30.09.2020**
(21) Application number: 20382232.5
(22) Date of filing: 26.03.2020
(51) Int. Cl.: H02B 13/035, H01H 33/12, H02B 7/01

(54) **GAS-INSULATED SWITCHGEAR FOR ELECTRIC DISTRIBUTION NETWORKS**

(30) Priority: 28.03.2019 ES 201930504 U
(71) Applicant: Ormazabal Y Cia S.L.U., 48140 Igorre (Bizkaia) (ES)
(72) Inventor: RODRÍGUEZ, Julio, 48140 IGORRE (Vizcaya) (ES); CASADO CARTÓN, Juan, María, 48140 IGORRE (Vizcaya) (ES); SAINZ DE LA MAZA ESCOBAL, Norberto, 48140 IGORRE (Vizcaya) (ES); SANCHEZ RUIZ, Juan, Antonio, 48140 IGORRE (Vizcaya) (ES)
(74) Representative: Herrero & Asociados, S.L.

(57) **Abstract**

Electrical switchgear inside a gas-insulated enclosure for electrical distribution networks, comprising a number of components enabling different electrical schemes to be formed, including an enclosure (1) fitted with at least one electrical connection means (2, 11) and at least one mechanical connection means (12, 13); operating means (3, 4) arranged between a busbar (5) of a main circuit and a branch busbar (6); a driving element (7, 8) configured to operate the operating means (3, 4); an operating mechanism (9) to actuate a driving element (7, 8); and a frame (10) where the operating means (3, 4) and the driving elements (7, 8) are assembled to form a single unit (14) incorporated within the enclosure (1).

## Description

### Object of the invention

The present invention has its field of application in electrical power distribution installations, in particular, it refers to an electrical switchgear integrated inside a gas insulated enclosure, comprising a number of elements, among others, operating means that allow performing the switching functions of breaking, making, disconnecting and grounding the electrical circuit, so that said switchgear integrated in the aforementioned enclosure allows configuring different electrical schemes.

### Background to the invention

At present, the electrical switchgear used in electric distribution networks is installed in usually metal enclosures, called cells. This switchgear includes operating means that perform the functions of breaking - making - disconnecting - grounding of the installation. In this way, in the event of a fault in the distribution line, a cut-off due to works, maintenance or optimisation of load distribution, for example, these operating means can be operated to obtain the desired electrical energy distribution, prevent supply interruptions or guarantee the protection of persons and electrical equipment such as transformers.

Conventionally, each of these operating means has its own driving element, which can be operated by an operating mechanism, which can be activated manually or automatically by a trigging mechanism responding to a fault current. The operating mechanisms are those which produce the driving force for carrying out the functions of breaking - making - disconnecting - grounding of the installation.

On the one hand, there are known operating means consisting of vacuum interrupters, which consist of a bottle inside which is housed a pair of electrical contacts, one fixed and one mobile, which is moved by the actuating of the interrupter, to perform the functions of breaking - making of the corresponding electrical circuit.

In addition, to carry out the functions of making - disconnecting - grounding of the electrical circuit, operating means are used such as disconnectors which comprise two contacts that can be connected to let the current pass or leave a physical separation determined by the safety standard or the manufacturer to prevent the current from passing, and which also comprise a third contact for grounding the electrical circuit. However, such disconnectors are sometimes not capable of performing the functions of the interrupter, i.e. to break the current when the circuit is under load or in the event of an overcurrent fault, if they have not been designed for this purpose or do not have the appropriate means of extinguishing it. Consequently, the electrical switchgear has both interrupters and disconnectors with separate driving elements.

At present, these operating means are incorporated in a metal enclosure insulated in a gas, such as air, the enclosure being airtight in those cases where the gas used is not air, such as sulphur hexafluoride (SF6), dry air, nitrogen, CO2, etc. The purpose of the insulating gas is to reduce the phase distance and thus achieve a compact enclosure insensitive to external or environmental conditions such as pollution or moisture. As for the type of gas used, it should be mentioned that the gas most used in recent years is SF6 gas due to its excellent dielectric properties and, among many other advantages, because it is not toxic to people. However, this gas has a great environmental impact due to its high potential for the greenhouse effect (GWP = 22800). For this reason, in recent years there has been a search for alternative gases, such as dry air, N2, O2 or CO2, or mixtures of fluorocetones with gases such as CO2, N2, O2, air or mixtures of these, which can replace this SF6 gas in this type of electrical switchgear.

On the other hand, the installation of the operating means and their driving elements inside the enclosure is carried out by installing each operating means with its corresponding driving element separately, i.e. first the disconnector with its driving element is installed inside the enclosure and then the interrupter with its driving element is installed, carrying out all relevant mechanical fastenings, electrical connections and routine tests, such as mechanical tests, voltage drop tests, etc. inside the enclosure before closing the enclosure. However, this way of mounting the operating means and their respective driving elements inside the enclosure has the disadvantage of having to carry out the assembly work in a small space. This work involves a large number of both electrical and mechanical connections which can eventually be poorly executed due to lack of space or poor accessibility. The same applies to the performance of routine tests inside the enclosure.

As regards the operating means for carrying out the functions of breaking - making - disconnecting - grounding of the electrical circuit, the order of action is that, in the event of a fault or need to cut off the rated current, the interrupter breaks the current and then the disconnector opens the circuit, thus leaving the circuit in disconnnection. Once the disconnection has been made, the disconnector proceeds to connect the electrical circuit to ground. On the other hand, in the connection operation, the prevailing philosophy as regards the order in which the operating means are operated is that first the disconnector closes the circuit (the disconnector closes the circuit without load) and then closes the interrupter, the latter being the one that withstands all the thermal and electrodynamic stresses caused by the short circuit caused by the closing of the contacts, stresses that are produced by the current intensity and the magnetic field created. These thermal and electrodynamic stresses are very dangerous for the interrupter's contacts, and can cause irreparable damage to these contacts if they are not quickly eliminated. An example of this is European patent EP2244275B1, which describes a switchgear in which the order in which the switching operations are performed by the operating means during connection does not correspond to the above-mentioned philosophy, but rather actuates the closing of the interrupter before the closing of the disconnector during the connection operation. Consequently, since the disconnector closes after the interrupter during the connection operation, the latter does not suffer any wear due to the pre-arcing of the closing, thus keeping the interrupter in the best possible condition to be able to break the current in the event of a fault and avoid undesirable phenomena, such as deterioration or the possibility of welding of the interrupter contacts.

The operating mechanism can also be configured so that the driving elements automatically actuate the interrupter and the disconnector one after the other. This reduces the operations required for the breaking-disconnecting and making switching functions and increases safety. Furthermore, during the breaking-disconnecting switching functions, the fact that only one operation is necessary to carry out these functions, i.e. the opening of the interrupter is automatically followed by the opening of the disconnector, avoids the phenomenon of non-maintained disruptive discharges, known as "NSDD", which are discharges produced between the contacts of a vacuum circuit breaker during the period of recovery voltage at industrial frequency, causing a high-frequency current to pass through linked to the parasitic capacity in the vicinity of the circuit-breaker.

On the other hand, from an operator's point of view, the maneuvering tasks are simplified, since it is no longer necessary to perform two maneuvers but only one.

### Description of the invention

The present invention refers to an electrical switchgear for application in electrical energy distribution facilities such as, for example, electrical transformation centers, distribution centers, substations, etc., for the protection and operation of electrical circuits, and which is intended to solve each and every one of the problems mentioned above.

Such switchgear comprises an enclosure, which may be a gas-tight enclosure insulated in a gas such as air, dry air, N2, O2, CO2, or gas mixtures such as fluorocetones with carrier gases such as CO2, N2, O2, air or mixtures thereof, or gas mixtures such as non-flammable hydrofluoroolefins with carrier gases such as N2, O2, dry air, helium, CO2 or mixtures thereof, etc.

The enclosure comprises at least one electrical connection means and at least one mechanical connection means accessible both from the inside and from the outside, the electrical switchgear of the invention being installed inside the said enclosure and therefore insulated in the same gas contained in the enclosure. This electrical switchgear comprises:
- operating means arranged between at least one busbar of a main circuit and at least one branch busbar, comprising at least one interrupter and one disconnector connected in series,
- at least one driving element configured to operate the operating means so that they can perform breaking, making, disconnecting and grounding functions, and
- an operating mechanism to produce the actuation of at least one driving element which may be arranged externally to the enclosure.

In accordance with the invention, the electrical switchgear also comprises a frame on which the operating means and driving elements are mounted, forming a single unit, so that this unit is incorporated within the enclosure, with the operating means and driving elements mounted in correspondence with the electrical connection means and mechanical connection means of the enclosure. This means that the operating means and driving elements are not assembled separately inside the enclosure, but that the assembly formed by the operating means and driving elements, once mounted on the frame, is installed inside the enclosure as a single part. It is only necessary to connect or couple the assembly with the electrical and mechanical means of connection of the enclosure. This reduces the number of both electrical and mechanical connections to be made inside the enclosure, thus reducing the risk of being able to make poor connections due to lack of space or poor accessibility to the connection points. Furthermore, the assembly formed by the operating means and driving elements mounted on the frame is subjected to routine tests outside the enclosure, which facilitates the performance of these tests. On the other hand, it also allows the operating mechanism to be quickly replaced in the field and in service, so that the quality of the power supply to the end consumers is minimally affected.

Thus, the frame comprises the first support means, which serve to support the main circuit busbars, these first support means being distanced from each other by at least one separator. The frame comprises second support means, which serves to support the interrupter and the interrupter driving element, with the interrupter being installed between the main circuit busbar and the driving element. In addition, between the main circuit busbars and the first support devices, at least one diffuser is provided to control the electric field and dissipate the heat generated when the interrupter is connected to the main circuit busbar. The frame also includes third support means, which serves to support the disconnector and the disconnector driving element, with the disconnector installed between the brunch busbar and the interrupter driving element. Finally, the frame includes at least two plates, separated by at least one spacer, which delimit the assembly installed inside the gas-insulated enclosure.

Depending on the operating practices and needs of the distribution network in which it is installed, the possibility has been considered whether or not the disconnector can have fault make capacity. This disconnector can be a three-position rotary switch (connection, disconnection and grounding) and comprises a fixed contact, a moving contact and a grounding contact. The moving contact is rigidly connected to the disconnector driving element, and the driving element is configured to cooperate in carrying out the connection - disconnection - grounding functions. The moving contact of the disconnector is connected to the branch busbar, e.g. by means of a rotary contact. On the other hand, the interrupter is a two-position vacuum interrupter (breaking and making) comprising a fixed contact connected to the main circuit busbar and a moving contact that can be moved in one direction of movement, the moving contact being connected to the fixed contact of the disconnector by means of conductive means. The interrupter can be either a load-break interrupter or a circuit breaker. Since the technology used for breaking the current is vacuum (the current is broken in a vacuum chamber), no decomposition of products is generated and therefore the insulation outside the interrupter remains intact.

Given the fault make capacity of the disconnector, the disconnector closes after the interrupter during the closing operation, and the latter does not suffer any wear due to the pre-arc of the closing, thus keeping the interrupter in the best possible conditions to be able to carry out the current break in the event of a fault, and thus avoid undesirable phenomena, such as the deterioration or the possibility of welding of the interrupter contacts. In this respect, the operating mechanism is configured so that the driving element operates the opening of the interrupter before the opening of the disconnector in a breaking operation but operates the closing of the interrupter before the closing of the disconnector in a connecting operation.

The operating mechanism can be configured so that the driving elements automatically actuate the interrupter and the disconnector one after the other. This reduces the operations required for the breaking operation and the disconnecting operation and increases safety.

Furthermore, in the breaking-making operation, the fact that only one operation is necessary to carry out these functions, i.e. in the event of a fault, followed by automatic opening of the circuit-breaker, the phenomenon of the previously described non-maintained disruptive discharges (NSDD) is avoided. In addition, it allows minimizing the dielectric requirements of the switching means, and optimizing them, since in other insulation means different from SF6, volume and distance optimization are critical. This is possible by synchronizing the operating means, i.e. the interrupter and the disconnector.

Finally, the electrical switchgear of the invention may comprise a cable compartment in which the electrical connection means of the gas-insulated enclosure are accessible in order to make the connection with the mains cables of the electrical network. The possibility has also been considered that the operating mechanism can be mounted inside an enclosure other than the gas-insulated enclosure, and that the enclosure of the operating mechanism can be mounted on the cable compartment.

### FIGURE DESCRIPTION

Figure 1.- Shows a perspective view of the frame of the gas-insulated electrical switchgear object of the present invention.
Figure 2.- Shows an elevation view of the operating means and their corresponding driving elements mounted on the frame, thus forming an assembly, where a frame plate has not been depicted for better visualization.
Figure 3.- Shows a top view of the enclosure incorporating the assembly in figure 2, where a wall of the enclosure has not been represented for a better visualization of the assembly inside the enclosure and where the operating mechanism is also displaced for a better understanding of the invention.
Figure 4.- Shows a profile view of the enclosure incorporating the assembly in figure 2, where no enclosure wall has been depicted for better visualization of the assembly inside the enclosure.
Figure 5.- Shows a perspective view of the electrical switchgear once it is completely assembled.

### Preferred embodiment of the invention

An example of a preferred embodiment is described below, mentioning the figures above, without limiting or reducing the scope of protection of the present invention.

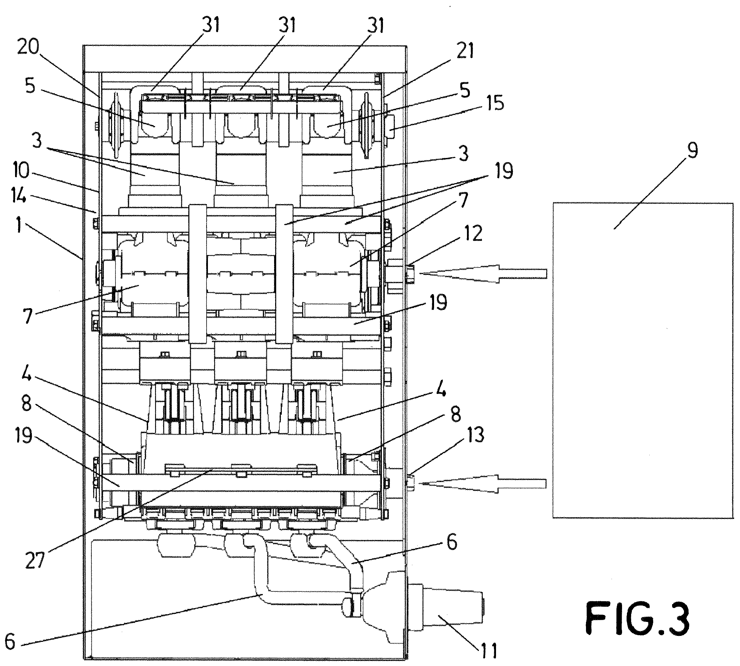

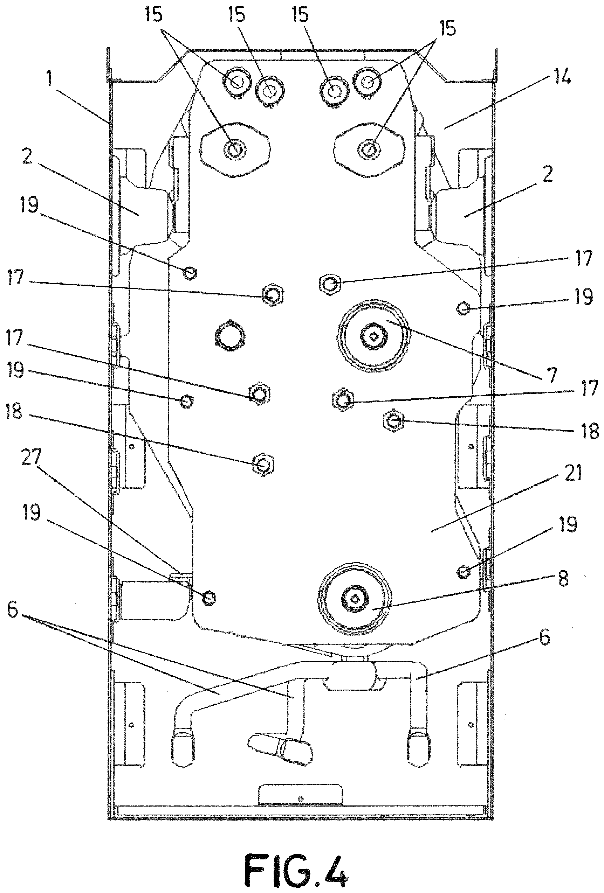

The electrical switchgear which is the subject of this invention has its application in electrical energy distribution installations such as, for example, electrical transformation centres, distribution centres, substations, etc., for the protection and operation of electrical circuits. As shown in figures 3-5, said switchgear is integrated inside an enclosure (1), this enclosure (1) may be airtight, and therefore insulated in a dielectric gas, for example, air, dry air, N2, O2, CO2, or gas mixtures such as, e.g. fluorocetones with carrier gases such as CO2, N2, O2, air or mixtures thereof, or mixtures of gases such as non-flammable hydrofluoroolefins with carrier gases such as N2, O2, dry air, helium, CO2 or mixtures thereof, etc.

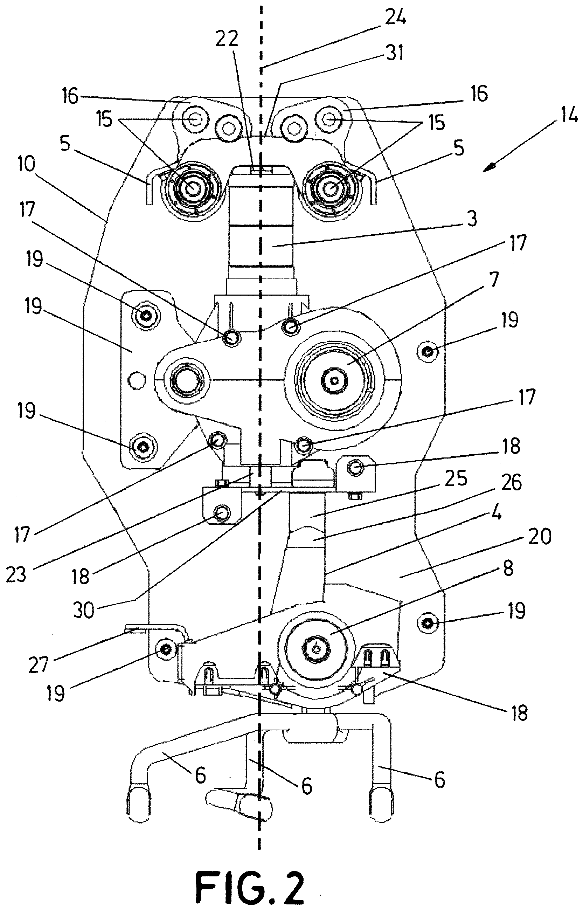

As shown in Figures 2 and 3, the electrical switchgear comprises operating means (3, 4) arranged between at least one busbar (5) of a main circuit and at least one branch busbar (6), with these operating means comprising at least one interrupter (3) and one disconnector (4) connected in series. The interrupter (3) can be a load break interrupter or a circuit-breaker, and may consist of a vacuum interrupter with two operating positions (breaking and making) comprising a fixed contact (22) connected to the busbar (5) of the main circuit and a moving contact (23) movable in one direction of movement (24), as shown in figure 2. The aforementioned moving contact (23) of the interrupter (3) is connected to a fixed contact (25) of the disconnector (4) by means of conductive means (30).The disconnector (4) may or may not has fault make capacity, and can be a three-position rotary disconnector (connecting, disconnecting and grounding), comprising the fixed contact (25), a moving contact (26) and a grounding contact (27). The moving contact (26) of the disconnector (4) is connected to the branch busbar (6), for example, by means of a rotating contact.

Furthermore, as shown in Figures 2 and 3, the switchgear includes at least one driving element (7, 8) configured to actuate the operating means (3, 4) so that they can perform breaking, making, disconnecting and grounding functions, and one operating mechanism (9) to produce the actuation of these driving elements (7, 8). The operating mechanism (9) is configured so that the driving element (7) operates the opening of the interrupter (3) before the opening of the disconnector (4) in a breaking and grounding operation, but operates the closing of the interrupter (3) before the closing of the disconnector (4) in a making operation. The operating mechanism (9) is also configured so that the driving elements (7, 8) automatically operate interrupter (3) and the disconnector (4) one after the other.

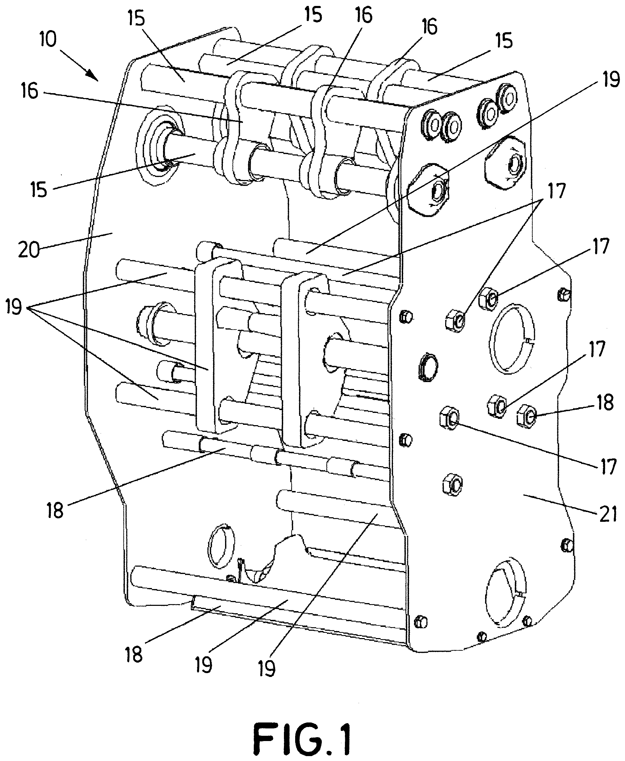

On the other hand, as shown in the figures, especially in figure 1, the electrical switchgear also comprises a frame (10), where the operating means (3, 4) and the driving elements (7, 8) are mounted, forming a single unit (14), so that this single unit (14) is incorporated inside the enclosure (1), leaving the operating means (3, 4) and the driving elements (7, 8) mounted in correspondence with the electrical connection means (2, 11) and the mechanical connection means (12, 13) of the enclosure (1). Only the connection or coupling of the single unit (14) with the electrical connection means (2, 11) and the mechanical connection means (12, 13) of the enclosure (1) is necessary.

The electrical connection means (2, 11) and the mechanical connection means (12, 13) are also accessible from the outside of the enclosure (1), as shown in Figures 3 to 5, so that other parts can be easily connected to the enclosure (1), e.g. the operating mechanism (9) by means of the mechanical connection means (12, 13) or other electrical switchgear by means of the electrical connection means (2, 11).

Thus, figures 1, 2 and 3 show that the frame (10) comprises the first support means (15), which serve to support the busbars (5) of the main circuit, these first support means (15) being spaced from each other by at least one spacer (16). The frame (10) includes second support means (17), which serves to support the interrupter (3) and the driving element (7) of the interrupter (3), with the interrupter (3) installed between the busbar (5) of the main circuit and the driving element (7). Likewise, between the busbars (5) of the main circuit and the first support means (15), at least one diffusing medium (31) is provided to control the electric field and dissipate the heat generated when the interrupter (3) is connected to the busbar (5) of the main circuit. The frame (10) also includes third support means (18), which serves to support the disconnector (4) and the driving element (8) of the disconnector (4), with the disconnector (4) installed between the branch busbar (6) and the driving element (7) of the interrupter (3). Finally, the frame (10) includes at least two plates (20, 21), separated by at least one spacer (19), which delimit the single unit (14) installed inside the gas-insulated enclosure (1).

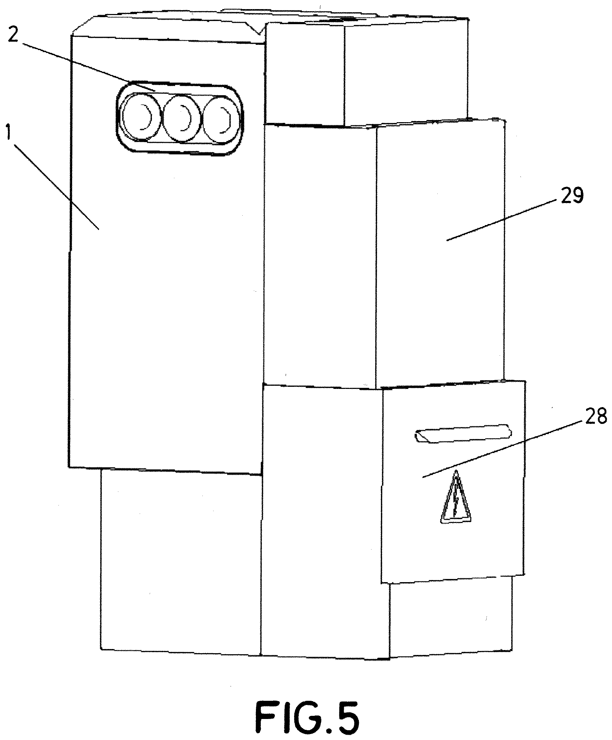

As shown in Figure 5, the electrical switchgear comprises a cable compartment (28) in which the electrical connection means (11) are accessible and to which the mains cables can be connected, and the operating mechanism (9) incorporated in an additional enclosure (29) can be placed on this cable compartment (28).

## Claims

1. Gas-insulated electrical switchgear for electric distribution networks, comprising
- an enclosure (1) fitted with at least one means of electrical connection (2, 11) and at least one means of mechanical connection (12, 13)
- operating means (3, 4) arranged between at least one busbar (5) of a main circuit and at least one branch busbar (6), said operating means comprising at least one interrupter (3) and one disconnector (4) connected in series
- at least one driving element (7, 8) configured to actuate the operating means (3, 4) performing breaking, making, disconnecting and grounding functions, and
- an operating mechanism (9) to produce actuating of at least one driving element (7, 8),
**characterised in that** it comprises a frame (10) on which the operating means (3, 4) and the driving elements (7, 8) are mounted in a single unit (14), so that this single unit (14) is incorporated within the enclosure (1), with the operating means (3, 4) and the driving elements (7, 8) mounted in correspondence with the means of electrical connection (2, 11) and the means of mechanical connection (12, 13).

2. Electrical switchgear according to claim 1, **characterised in that** the frame (10) comprises first support means (15), which serve to support the busbars (5) of the main circuit, these first support means (15) being separated from each other by at least one spacer (16).

3. Electrical switchgear according to claim 2, **characterised in that** it comprises at least one diffusing medium (31) between the busbars (5) of the main circuit and the first support means (15).

4. Electrical switchgear according to claim 2, **characterised in that** the frame (10) comprises second support means (17), which serve to support the interrupter (3) and the driving element (7) of said interrupter (3), with the interrupter (3) being installed between the busbar (5) of the main circuit and the driving element (7).

5. Electrical switchgear according to claim 4, **characterised in that** the frame (10) comprises third support means (18), which serve to support the disconnector (4) and the driving element (8) of said disconnector (4), with the disconnector (4) installed between the branch busbar (6) and the driving element (7) of the interrupter (3).

6. Electrical switchgear according to any of the claims 2 to 5, **characterized in that** the frame (10) comprises at least one spacer (19) between at least two plates (20, 21) that delimit the single unit (14).

7. Electrical switchgear according to any of the preceding claims, **characterised by** in that the interrupter (3) is a vacuum interrupter with two operating positions (breaking and making) and the disconnector (4) is a rotary disconnector of the hinge type with three operating positions (connecting, disconnecting and grounding) and with fault make capacity.

8. Electrical switchgear according to any of the preceding claims, **characterised in that** the enclosure (1) incorporating the single unit (14) is airtight and insulated in dry air.

9. Electrical switchgear according to any of the preceding claims, **characterised in that** the electrical connection means (2, 11) and the mechanical connection means (12, 13) are accessible from the outside of the enclosure (1).

10. Electrical switchgear according to claim 1, **characterised in that** the operating mechanism (9) is configured so that the driving element (7) of the interrupter (3) actuates the opening of interrupter (3) before the opening of disconnector (4) in a breaking and disconnecting operation, but actuates the closing of interrupter (3) before the closing of disconnector (4) in a making operation.

11. Electrical switchgear according to claim 10, **characterised in that** the operating mechanism (9) is configured so that the driving elements (7, 8) actuate the interrupter (3) and the disconnector (4) automatically one after the other.

12. Electrical switchgear according to any of the preceding claims, **characterised in that** the interrupter (3) houses a fixed contact (22) connected to the busbar (5) of the main circuit and a moving contact (23) movable in one direction of movement (24), said moving contact (23) being connected to a fixed contact (25) of the disconnector (4) through conductive means (30).

13. Electrical switchgear according to claim 12, **characterised in that** the disconnector (4) comprises a fixed contact (25), a moving contact (26) and an grounding contact (27), with the moving contact (26) being rigidly connected to the driving element (8) of the disconnector (4), said driving element (8) being configured to cooperate in carrying out the connection - disconnection - grounding functions and because the moving contact (26) is connected to the branch busbar (6) by means of a rotating contact.

14. Electrical switchgear according to claim 1, **characterised in that** it comprises a cable compartment (28) where the electrical connection means (11) are situated accessibly.

15. Electrical switchgear according to claim 14, **characterised in that** the operating mechanism (9) is located inside an additional enclosure (29) on the cable compartment (28).
